# EUROPÄISCHE PATENTSCHRIFT

(11) **EP 2 395 577 B1**
(45) Veröffentlichungstag und Bekanntmachung des Hinweises auf die Patenterteilung: **06.03.2013**
(21) Anmeldenummer: 11169386.7
(22) Anmeldetag: 10.06.2011
(51) Int. Cl.: H01M 2/36, H01M 2/38, H01M 10/42, A01G 27/00, H01M 10/50

(54) **Verfahren und Anordnung zur Belieferung eines Gefäßes mit unterschiedlichen Fluiden**
Method and system for supplying a container with different fluids
Procédé et agencement pour la livraison d'un récipient doté de fluides différents

(30) Priorität: 10.06.2010 DE 102010017322
(43) Veröffentlichungstag der Anmeldung: 14.12.2011
(73) Patentinhaber: Hagemann-Systems GmbH, 38104 Braunschweig (DE)
(72) Erfinder:
(74) Vertreter: Müller, Enno

(56) Entgegenhaltungen:
- EP-A1- 0 721 228
- DE-A1- 3 132 413
- GB-A- 2 176 930
- JP-A- 2003 123 719
- US-A- 4 522 896

## Beschreibung

Die Erfindung betrifft zunächst ein Verfahren zum Transport von Fluid bezüglich einer Batteriezelle in einem Akkumulatorgefäß, mit einer in die Batteriezelle führenden Fluidleitung.

Derartige Verfahren sind bereits bekannt geworden. Vorliegend ist insbesondere die Belieferung eines Akkumulatoren-Batteriegefäßes mit Wasser bzw. destilliertem Wasser, gegebenenfalls auch mit einer Säure, von Bedeutung.

Hinsichtlich Batteriegefäßen wird beispielsweise auf die nicht vorveröffentlichte deutsche Gebrauchsmusteranmeldung 20 2009 008 503 verwiesen. Weiter auch bezüglich darin zwischen einzelnen Akkumulatorplatten einsetzbaren Distanzplatten auf die DE 10 2008 037 040 A1 und auf die nicht vorveröffentlichte deutsche Gebrauchsmusteranmeldung 20 2009 015 729.

Bezüglich der Wassernachfüllung bei einem Batteriegehäuse wird herkömmlich mit Schwimmerventil-Einrichtungen gearbeitet. Hierzu wird beispielsweise auf die nicht vorveröffentlichte deutsche Patentanmeldung 10 2009 036 409 verwiesen.

Die US 4,522,896 zeigt ein automatisches System zum Nachfüllen von Wasser sowie zum Ablassen von Gasen an Batterien. Hierbei sind Batterien an über eine Entnahmeleitung einerseits sowie eine Rückgabeleitung andererseits an ein Reservoir für Wasser angeschlossen. Die Entnahmeleitung ist mit einer Ansaugpumpe versehen. Vor der Pumpe ist noch eine regelbare Luftzufuhr vorgesehen. Die Rückgabeleitung ist weist ihrerseits eine Öffnung mit Flammendurchschlagsicherung auf, über die Gase abgegeben werden können.

Ausgehend von dem vorbeschriebenen Hintergrund beschäftigt sich die Erfindung mit der Aufgabenstellung, ein Verfahren und/oder eine Anordnung zur Belieferung eines Gefäßes mit unterschiedlichen Fluiden anzugeben, das bzw. die im Hinblick auf eine zuverlässige Funktion vorteilhaft ausgestaltet ist.

Die Lösung der Aufgabe ist beim Gegenstand des Anspruches 1 gegeben, wobei darauf abgestellt ist, dass die Fluidleitung mit einer als selbstansaugend und/oder richtungsumkehrbar ausgebildeten Fördereinrichtung zusammenwirkt. Hiermit ist ein Verfahren zur Fluidbelieferung und/oder Fluidentnahme bezüglich einer oder mehreren Batteriezellen in einem Akkumulator angegeben, bzw. auch, wie weiter unten noch im Einzelnen beschrieben, eine diesbezügliche Anordnung, bei der zufolge der genannten Fördereinrichtung erhebliche Vorteile gegeben sind. Es kann ggf. (allein schon), im Hinblick auf die Selbstansaugung, auf besondere Ventiltechnik verzichtet werden. Es kann auch sowohl Fluid in ein Behältnis gefördert werden wie auch hieraus herausgefördert werden. Gemäß weiteren Ausgestaltungen kann die Fördereinrichtung auch nur zum Herausfördern oder nur zur Fluid-Lieferung ausgebildet sein. Insbesondere kann eine Batteriezelle mit Fluid, insbesondere einer Säure, aber gegebenenfalls auch einer Lauge, oder destilliertem Wasser, beliefert werden, es kann aber auch - ggf.: nur - Fluid bzw. Säure, Lauge etc entnommen werden, beispielsweise zu Probezwecken.

Erfindungsgemäß wird jedenfalls bezüglich einer Lieferleitung das Fluid vor Durchsetzung der Fördereinrichtung und vor der Einspeisung in das Gefäß durch das Gefäß hindurchgeleitet. Dies kann dazu dienen, wenn das Fluid in dem Gefäß eine höhere Temperatur hat als das Fluid in einem Vorratsbehältnis, eine Vorwärmung durchzuführen. Es kann auch dazu genutzt sein, das Fluid vorzukühlen, wenn entsprechend umgekehrte Temperaturverhältnisse vorliegen. Die Durchleitung kann im einfachsten Fall durch Hindurchführen eines Leitungsabschnittes durch das Gefäß erfolgen. Sie kann aber auch, wie weiter unten noch im Einzelnen erläutert, durch eine Durchleitung durch Einbauelemente des Gefäßes realisiert sein.

Als solche selbstansaugende und/oder richtungsumkehrbare Fördereinrichtung kommt beispielsweise eine Kolbenpumpe in Frage. Insbesondere aber auch eine Schlauchpumpe.

Insbesondere wenn_eine Schlauchpumpe vorgesehen ist, kommt die Fördereinrichtung auch mit dem zu fördernden Fluid nicht unmittelbar in Berührung. Nur der Schlauch muss entsprechend säurefest ausgebildet sein, was aber bei herkömmlichen Kunststoffschläuchen schon in der Regel ohne Weiteres gegeben ist. Durch das Quetschen des Schlauches kann auch bei Stillstand der Pumpe ein vollständiger, insbesondere auch in dem erforderlichen Maß gasdichter, Verschluss erreicht werden. Zudem ist die Fördereinrichtung auch selbst ansaugend. Die Zuleitung zu der Schlauchpumpe kann entsprechend drucklos sein. Ein außerhalb des Batteriegefäßes vorgesehenes Fluidreservoir muss nicht selbst unter Druck gesetzt werden. Die Ableitung von der Schlauchpumpe enthält nur den gerade erforderlichen Förderdruck. Die genannte Abdichtung mittels der Schlauchpumpe ermöglicht es auch ohne Weiteres, die Anforderungen an einen Explosionsschutz zu erfüllen.

Dadurch, dass eine entsprechende Umschalteinrichtung in Förderrichtung vor der Fördereinrichtung vorgesehen ist, kann dieselbe Förderung sowohl beispielsweise Wasser betreffen, wie auch Luft. Gerade hinsichtlich einer Luftförderung ist die selbstansaugende Fördereinrichtung vorteilhaft. Mitunter kann es erforderlich sein, in Gefäße wie insbesondere ein bereits angesprochenes Batteriegefäß, Luft einzufördern. Im Weiteren kann aber auch eine darüber hinausgehende Umschaltung vorgesehen sein, zu einer dritten oder weiteren Förderleitung, die beispielsweise die Förderung von Säure in das Gefäß, insbesondere Batteriegefäß, ermöglicht.

Vorrichtungsmäßig betrifft die Erfindung eine diesbezügliche Anordnung. Nach einem ersten Konzept, das konkret auf das genannte Batteriegefäß abstellt, ist wesentlich, dass die Fördereinrichtung als selbstansaugende und/oder richtungsumkehrbare Fördereinrichtung realisiert ist und dass Mittel zum Hindurchleiten des Fluids durch das Gefäß vor Durchsetzung der Fördereinrichtung und vor Einspeisung in das Gefäß vorgesehen sind.

Nachstehend weiter angegebene und erläutere Merkmale können sowohl im Hinblick auf das Verfahren wie auch im Hinblick auf die genannte Anordnung von Bedeutung sein. Diese weiteren Merkmale sind oftmals in ihrer bevorzugten Zuordnung zu den bereits erläuterten Anspruchskonzepten beschrieben bzw. dargestellt, sie können aber auch in einer Zuordnung zu nur einem oder mehreren einzelnen Merkmalen, die hier beschrieben oder zeichnerisch dargestellt sind, oder unabhängig oder in einem anderen Gesamtkonzept von Bedeutung sein.

Die Lieferleitung ist bevorzugt zumindest, wenn die Fördereinrichtung_als Schlauchpumpe ausgebildet ist, im Bereich der Schlauchpumpe als Schlauch, jedenfalls als im Hinblick auf die Schlauchpumpe deformierbar ausgebildet. Vor- und Nachgeschaltet zu dem Abschnitt, der die Schlauchpumpe durchsetzt, kann die Lieferleitung als Kunststoff- oder Metallrohr, natürlich auch als Schlauch, oder in sonstiger geeigneter Weise gestaltet sein.

Weiterhin ist bevorzugt, dass dieselbe Förderrichtung auch zur Entnahme von Fluid aus dem Gefäß ausgebildet ist. Im Falle der Schlauchpumpe kann dies durch einfachen Rücklauf der Schlauchpumpe erreicht werden. Es kommt zu einem Ansaugen der unter den Wasserspiegel des Gefäßes reichenden Einleitungsleitung. Ein solches Zurückfördern kann zunächst Bedeutung haben, wenn der Wasserspiegel oder ein sonstiger Fluidspiegel in dem Gefäß zu hoch angestiegen ist. Weiter kann es auch Bedeutung haben im Hinblick auf eine Probenentnahme.

In diesem Zusammenhang ist auch bevorzugt, dass die Umschaltung im Falle der Entnahme von Fluid aus dem Gefäß auf eine eine Messeinrichtung aufweisende Rückförderleitung erfolgt. Die Rückförderung kann dann beispielsweise in dem Ausmaß nur erfolgen, dass das Fluid bezüglich der Messeinrichtung ein ausreichendes Niveau in der Rückförderleitung erreicht.

Im Hinblick auf ein Fluid wie es insbesondere in Bezug auf Batteriegefäße zu fördern ist, kann es auch zu Festbestandteilen in dem Fluid, beispielsweise zufolge einer Auskristallisation, kommen. Auch in dieser Hinsicht kann eine der genannten Fördereinrichtungen sehr vorteilhaft sein. Im Falle einer Schlauchpumpe ergibt sich gleichsam eine Zerstörung von solchen möglichen Auskristallisierungen oder ähnlichen zerdrückbaren Festkörpern im Zuge des beispielsweise Herausförderns aus dem Batteriegefäß. Insofern kann unter Umständen auch eine ledigliche Umlaufförderung zeitweise sinnvoll sein.

Die Messeinrichtung kann insbesondere eine Säuremesseinrichtung sein, um beispielsweise die Säuredichte des Fluids in dem Batteriegefäß zu prüfen. Die Säuredichte, die das spezifische Gewicht einer Säure pro Volumeneinheit angibt, kann als Maß für den Ladezustand herangezogen werden. Hinsichtlich eines Messverfahrens kann in Einzelheit ein berührungsloses optisches Messverfahren, etwa beruhend auf dem Reflexionsprinzip, eingesetzt werden, darüber hinaus kann es sich auch beispielsweise um eine an sich bekannte Messung mittels Bleidraht handeln.

Eine zweite oder weitere Lieferleitung kann zur Lieferung von Umgebungsluft ausgebildet sein, wozu sie angeschlossen an die Umschalteinrichtung frei in der Umgebung beispielsweise endet. Es kann aber auch, wenn das Gefäß und die hier beschriebene Anordnung in einem gemeinsamen Raum angeordnet sind, vorgesehen sein, dass diese zur Luftleitung dienende Lieferleitung außerhalb des Raumes mündet, zur Ansaugung von Luft von außerhalb des Raumes.

Darüber hinaus kann eine zweite oder weitere Lieferleitung zur Lieferung einer Wirkflüssigkeit wie etwa einer Säure oder dgl. eingerichtet sein. Diese Lieferleitung steht dann bevorzugt mit einem entsprechenden Vorratsbehältnis, in dem diese Wirkflüssigkeit vorgehalten wird, in Leitungsverbindung.

Die erste Lieferleitung ist bevorzugt zur Lieferung von Wasser, weiter vorzugsweise zur Lieferung von destilliertem Wasser, ausgebildet.

Die bereits angesprochene Hindurchleitung von Fluid, das durch die erste und/oder eine weitere Lieferleitung gefördert wird, nämlich Durchleitung durch das Gefäß vor Durchsetzen der Fördereinrichtung, kann auch beispielsweise dadurch gegeben sein, dass eine, bezogen auf die genannten Batteriegefäße, vorgesehene Distanzplatte mit einer integrierten Fluidleitung ausgebildet ist. Die Fluidleitung kann beispielsweise bei Herstellung der Distanzplatte insgesamt im Blasverfahren einfach eingeformt sein. Sie kann aber auch mit der Distanzplatte verklebt oder verschweißt sein oder mechanisch mit ihr verbunden sein. Dies ist insbesondere günstig, wenn die Distanzplatte, wie in den eingangs genannten Anmeldungen auch beschrieben, profiliert ausgebildet ist, also Rücksprungbereiche aufweist, die nicht in unmittelbaren Anlagekontakt mit einer Akkumulatorplatte im eingebauten Zustand sind. Durch diese Rücksprungbereiche kann dann eine solche Leitung gelegt sein.

Es kann auch mittels eines in dem Batteriegefäß vorgesehenen geeigneten Sensors eine Rückmeldung über die Fluidhöhe in dem Batteriegefäß an die Anlage erfolgen.

Wesentlich ist im Weiteren auch, dass alle beschriebenen Teile, die Pumpe und/oder die Schalteinrichtung und/oder die verschiedenen Lieferleitungen und/oder die Messeinrichtung in einer einzigen kompakten Einheit zusammengefasst ausgebildet sein können.

Weiterhin ist auch bevorzugt, dass die Anordnung mit einem oder mehreren Messfühlern in dem Gefäß, gegebenenfalls in einer oder mehreren Batteriezellen eines Akkumulator-Batteriegefäßes, zusammenwirkt. Etwa um einen Füll- und/oder Ladestand in einem solchen Gefäß zu erfassen und zu melden. Die Fördereinrichtung kann hierauf selbsttätig dann beispielsweise eine Nachfüllung auslösen. Diese Messung kann im Einzelnen beispielsweise optisch, mit Ultraschall oder mit Bleidraht vorgenommen sein.

Nachstehend ist die Erfindung weiter anhand der beigefügten Zeichnung erläutert, die aber lediglich ein Ausführungsbeispiel darstellt. Hierbei zeigt:
- Fig. 1: eine Gesamtansicht der Anordnung;
- Fig. 2: eine Ansicht von oben;
- Fig. 3: eine Explosionsdarstellung einer Distanzplatte im Hinblick auf eine Ausbildung mit einer dort hindurchgehenden Fluidleitung;
- Fig. 4: eine schematische teilweise Querschnittsansicht der Anordnung.

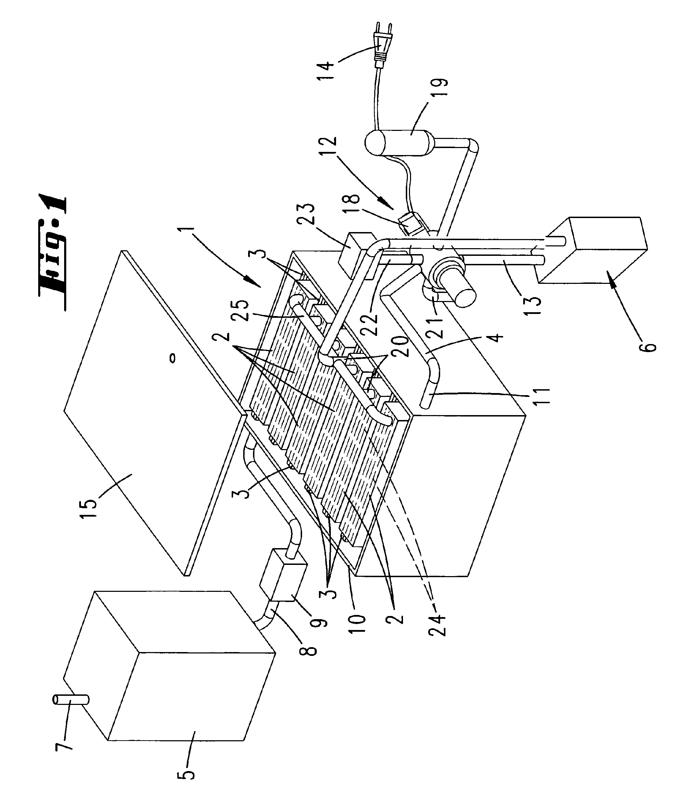

Dargestellt und beschrieben ist, zunächst mit Bezug zu Fig. 1, ein als Batteriegehäuse ausgebildetes Gefäß 1. Bei dem Ausführungsbeispiel befinden sich in dem Gefäß 1 eine Mehrzahl von Akkumulatorplatten 2 enthaltende Batteriezellen 24. Zwischen den Akkumulatorplatten bzw. Batteriezellen sind, hier nur schematisch angedeutet, Distanzplatten 3 angeordnet.

Mittels einer Zuleitung 4 wird insbesondere Wasser, nämlich bevorzugt destilliertes Wasser, aus einem Vorratsbehältnis 5 mittels einer Fördereinrichtung 6, die als Schlauchpumpe ausgebildet ist, in das Gefäß 1 bzw. einzelne Batteriezellen 24 eingeleitet. Hierbei kann eine Verteilleitung 25 vorgesehen sein. Es können Einzelgefäße bzw. Batteriezellen 24 einzeln zur Belieferung oder Entnahme ausgewählt werden. Das Vorratsbehältnis 5 weist eine Entlüftungsöffnung bzw. Einfüllstutzen 7 auf. Weiter eine Entnahmeleitung 8, in der ein Rückschlagventil 9 angeordnet ist. Weiter führt die Entnahmeleitung 8 beim Ausführungsbeispiel durch eine Gefäßwandung 10 in das Gefäß 1 und ist dort mit den Distanzplatten, in denen Leitungsabschnitte ausgebildet sind, verbunden. Die Distanzplatten sind hierzu geeignet zusammengeschaltet.

Aus dem Gefäß heraus führt ein Leitungsabschnitt 11, der zu einer Umschalteinrichtung 12 führt. Von der Umschalteinrichtung 12 führt ein Leitungsabschnitt 13 zu der Fördereinrichtung 6. Die Umschalteinrichtung 12 wird insbesondere elektromechanisch betrieben. Hierzu ist eine Stromversorgung vorgesehen, wozu auch ein Anschlussstecker 14 dargestellt ist. Natürlich kann die Stromversorgung auch gegebenenfalls über den Akkumulator selbst erfolgen.

Weiter kann das Gefäß 1 von einer Abdeckung 15 im Betrieb abgedeckt sein.

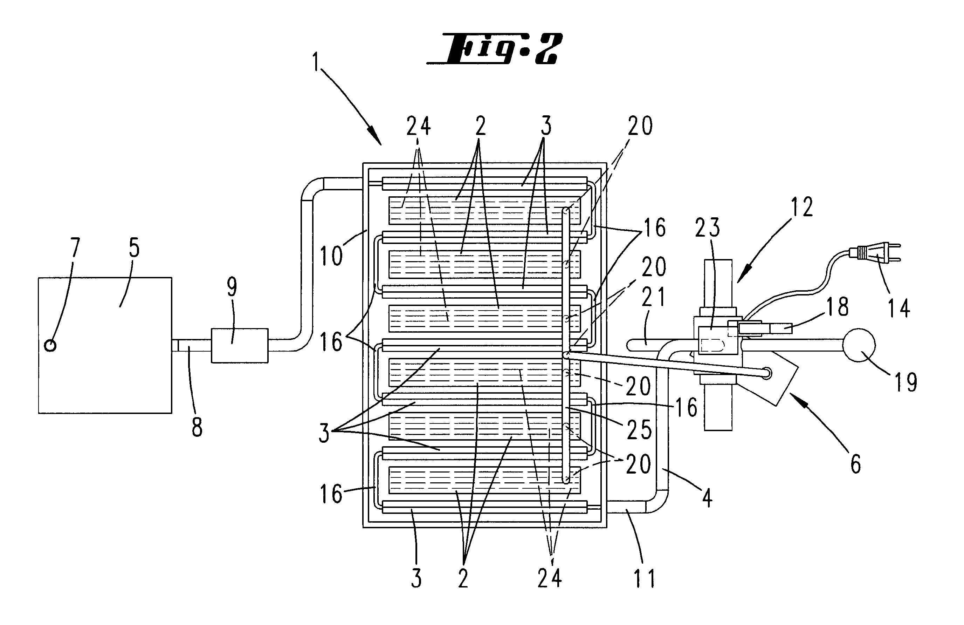

Die Draufsicht der Fig. 2 ist bei abgenommener Abdeckplatte gegeben. Die Distanzplatten 3 sind im Verhältnis zu den Akkumulatorplatten 2 bzw. Batteriezellen 24 nur schematisch dargestellt. Die Akkumulatorplatten bzw. Batteriezellen und die Distanzplatten sind grundsätzlich eng gepackt. Lediglich der Übersichtlichkeit wegen ist hier eine auseinandergezogene Anordnung dargestellt. Es ist weiter angedeutet eine jeweilige Leitungsverbindung 16 zwischen zwei Distanzplatten 3.

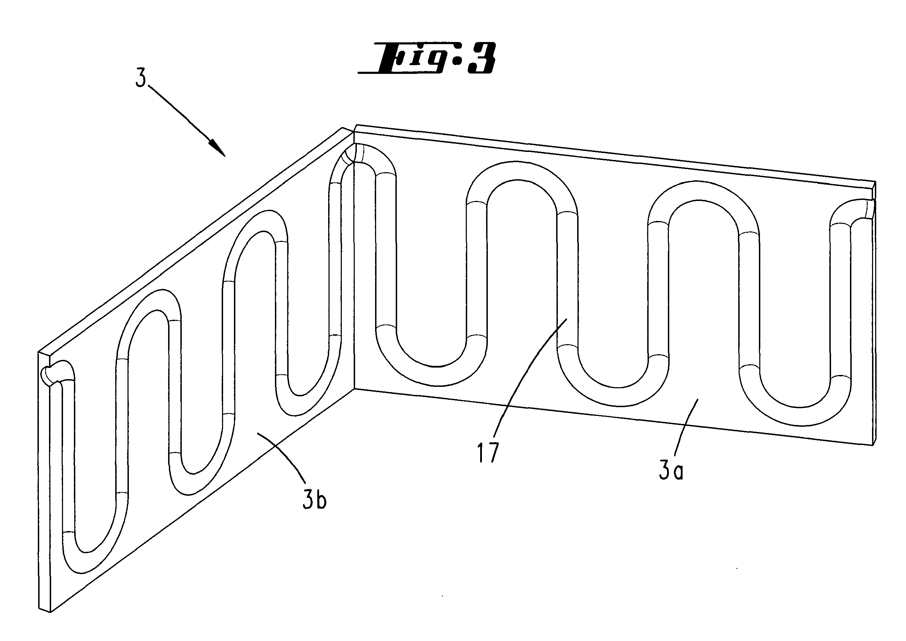

Die Darstellung der Fig. 3 gibt schematisch, im aufgeklappten Zustand, die Ausbildung einer solchen Distanzplatte 3, die beispielsweise im Blasformverfahren hergestellt ist, wieder. Die Distanzplatte setzt sich hierbei aus zwei Hälften 3a und 3b zusammen. In jeder Hälfte ist, beispielsweise im Querschnitt halbkreisförmig, ein Leitungsteil 17 eingeformt. Die Hälften 3a, 3 b sind dann geeignet miteinander verschweißt, wobei die Leitungshälften 17 sich zur Bildung der Leitung ergänzen.

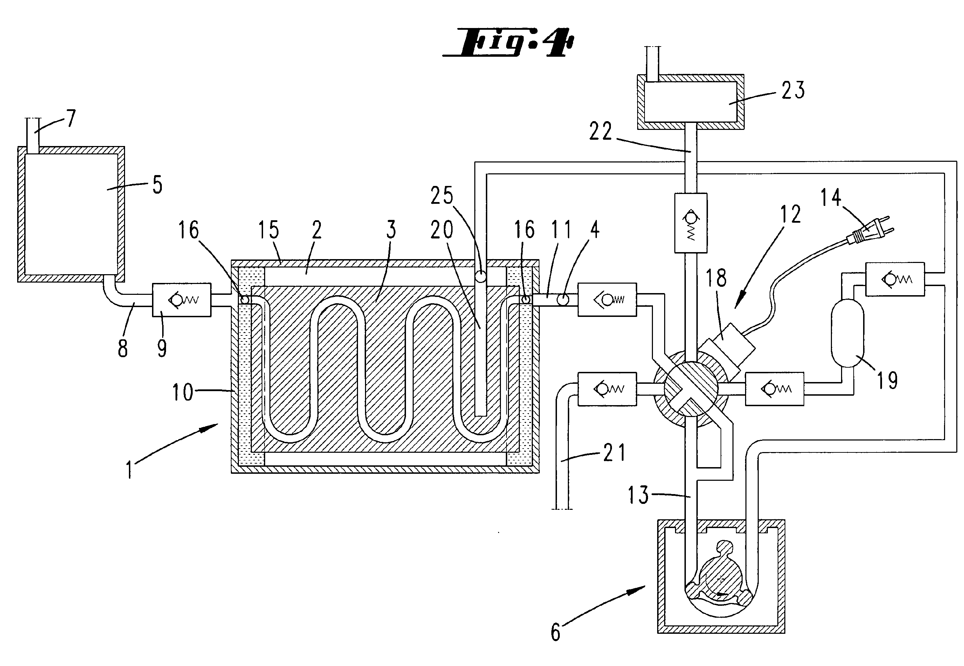

Mit Bezug zu Fig. 4 ist zu erkennen, dass aus dem Vorratsbehältnis 5 mittels der Leitung 8 über ein Rückschlagventil 9 Flüssigkeit durch eine hier im Querschnitt dargestellte Distanzplatte 3 gesaugt wird und zu der Schalteinrichtung 12 gelangt. Die Umschaltmöglichkeiten sind hier nur schematisch dargestellt. Insbesondere können in Achsrichtung des Schaltkolbens mehrere Schaltwege unterschiedlicher Art hintereinander angeordnet sein, die mit entsprechend hintereinander in den Schaltzylinder mündenden Leitungsabschnitten dann jeweils zusammenwirken. Hierzu kann bei der Einleitung in den Schaltzylinder auch jeweils noch ein Sammelraum, der sich in Längsrichtung des Schaltkolbens erstreckt, vorgesehen sein.

Die Schlauchpumpe ist auch schematisch dargestellt.

Weiter besitzt die Schalteinrichtung eine Steuerlogik, die hier insgesamt mit dem Bezugszeichen 18 angedeutet ist.

Das Teil 19 stellt eine Messeinrichtung dar, in welche durch Rücklaufen der Fördereinrichtung der Schlauchpumpe Flüssigkeit, die über das/die Tauchrohr(e) 20 aus dem Behältnis 1 entnommen wird, eingefördert werden kann zur Analyse. Durch nochmaliges Umdrehen der Förderrichtung kann diese Flüssigkeit dann wieder in das Behältnis 1 zurückgefördert werden. Mit 21 ist ein weiterer Leitungsabschnitt bezeichnet, durch welchen beim Ausführungsbeispiel Luft aus der Umgebung angesaugt werden kann und in das Behältnis 1 bzw. eine Batteriezelle 24 gefördert werden kann. 22 bezeichnet einen Leitungsabschnitt, mittels welchem aus einem beispielsweise Säurevorratstank 23 Säure entnommen und in das Behältnis 1 gefördert werden kann.

Alle offenbarten Merkmale sind (für sich) erfindungswesentlich. Die Unteransprüche charakterisieren in ihrer fakultativ nebengeordneten Fassung eigenständige erfinderische Weiterbildung des Standes der Technik, insbesondere um auf Basis dieser Ansprüche Teilanmeldungen vorzunehmen.

### BEZUGSZEICHENLISTE

- 1: Gefäß
- 2: Akkumulatorplatte
- 3: Distanzplatte 3a, 3b Hälften
- 4: Zuleitung
- 5: Vorratsbehältnis
- 6: Fördereinrichtung, Schlauchpumpe
- 7: Entlüftungsöffnung
- 8: Entnahmeleitung
- 9: Rückschlagventil
- 10: Gefäßwandung
- 11: Leitungsabschnitt
- 12: Umschlageinrichtung
- 13: Leitungsabschnitt
- 14: Anschlussstecker
- 15: Abdeckung
- 16: Verbindung
- 17: Leitungsteil
- 18: Steuerlogik
- 19: Messeinrichtung
- 20: Tauchrohr
- 21: Leitungsabschnitt, Lieferleitung
- 22: Leitungsabschnitt. Lieferleitung
- 23: Säurevorratstank
- 24: Batteriezelle
- 25: Verteilerleitung

## Patentansprüche

1. Verfahren zum Transport von Fluid bezüglich einer Batteriezelle in einem Akkumulator-Batteriegefäß (1), mit einer in die Batteriezelle führenden Fluidleitung (4, 25), wobei die Fluidleitung mit einer selbstansaugend und/oder richtungsumkehrbar ausgebildeten Fördervorrichtung (6) zusammenwirkt, **dadurch gekennzeichnet, dass** aus einer Lieferleitung (11) das Fluid vor Durchsetzung der Fördereinrichtung (6) und vor Einspeisung in das Gefäß (1) durch das Gefäß (1) hindurchgeleitet wird.

2. Verfahren nach Anspruch 1, **dadurch gekennzeichnet, dass** die Fördereinrichtung als Schlauchpumpe (6) ausgebildet ist.

3. Verfahren nach einem oder mehreren der vorhergehenden Ansprüche, **dadurch gekennzeichnet, dass** durch dieselbe Fördereinrichtung (6) auch eine Entnahme von Fluid aus dem Gefäß (1) erfolgt.

4. Verfahren nach einem oder mehreren der vorhergehenden Ansprüche, **dadurch gekennzeichnet, dass** durch eine zweite oder weitere Lieferleitung (21) eine Lieferung von Umgebungsluft erfolgt und/oder durch eine zweite oder weitere Lieferleitung (22) eine Lieferung eines Fluidkonzentrats erfolgt.

5. Verfahren nach einem oder mehreren der vorhergehenden Ansprüche, **dadurch gekennzeichnet, dass** durch die erste Lieferleitung (11) eine Lieferung von Wasser, vorzugsweise destilliertem Wasser, erfolgt.

6. Verfahren nach einem oder mehreren der vorhergehenden Ansprüche, **dadurch gekennzeichnet, dass** das Fluid der ersten und/oder einer weiteren Lieferleitung (11, 22, 23) vor Einspeisung in das Gefäß (1) durch das Gefäß (1) hindurchgeleitet wird.

7. Verfahren nach einem oder mehreren der vorhergehenden Ansprüche, **dadurch gekennzeichnet, dass** die Durchleitung der Flüssigkeit durch das Gefäß (1) mittels einer an oder in einer Distanzplatte ausgebildeten Leitung erfolgt.

8. Anordnung zum Fluidtransport bezüglich einer Batteriezelle in einem Akkumulatorgefäß, mit einer in die Batteriezelle führenden Fluidleitung (4, 25), wobei als Fördervorrichtung (6) eine mit einem Teilabschnitt der Fluidleitung (4, 25) zusammenwirkende selbstansaugend und/oder richtungsumkehrbar ausgebildete Fördereinrichtung (6) vorgesehen ist, **gekennzeichnet durch** Mittel (17) zum Hindurchleiten des Fluids **durch** das Gefäß (1) vor Durchsetzung der Fördereinrichtung (6) und vor Einspeisung in das Gefäß (1).

## Claims

1. Method for transporting fluid relative to a battery cell in an accumulator battery vessel (1), comprising a fluid line (4, 25) that leads into the battery cell, the fluid line cooperating with a conveying device (6) that is configured to be self-priming and/or reversible, **characterised in that** the fluid is channelled out of a delivery line (11), and through the vessel (1) before it is carried through the conveying apparatus (6) and fed into the vessel (1).

2. Method according to claim 1, **characterised in that** the conveying apparatus is configured as a peristaltic pump (6).

3. Method according to one or more of the preceding claims, **characterised in that** fluid is also extracted from the vessel (1) by the same conveying apparatus (6).

4. Method according to one or more of the preceding claims, **characterised in that** ambient air is delivered through a second or additional delivery line (21) and/or a fluid concentrate is delivered through a second or additional delivery line (22).

5. Method according to one or more of the preceding claims, **characterised in that** water, preferably distilled water, is delivered through the first delivery line (11).

6. Method according to one or more of the preceding claims, **characterised in that** the fluid from the first and/or an additional delivery line (11, 22, 23) is channelled through the vessel (1) before it is fed into the vessel (1).

7. Method according to one or more of the preceding claims, **characterised in that** the fluid is conducted through the vessel (1) by means of a line formed on or in a spacer plate.

8. Assembly for transporting fluid relative to a battery cell in an accumulator battery vessel, comprising a fluid line (4, 25) that leads into the battery cell, a conveying apparatus (6) that cooperates with a portion of the fluid line (4, 25) and is configured to be self-priming and/or reversible being provided as a conveying device (6), **characterised by** means for channelling the fluid through the vessel (1) before it is carried through the conveying apparatus (6) and fed into the vessel (1).

## Revendications

1. Procédé pour le transport d'un fluide relatif à un élément de batterie dans un bac de batterie d'accumulateurs (1), avec une conduite de fluide (4, 25) menant dans l'élément de batterie, la conduite de fluide coopérant avec un dispositif d'acheminement (6) autoaspirant et/ou dont le sens de déplacement peut être inversé, **caractérisé en ce que** depuis une conduite de livraison (11), le fluide est conduit à travers le bac (1) avant la mise en oeuvre du dispositif d'acheminement (6) et avant l'alimentation dans le bac (1).

2. Procédé selon la revendication 1, **caractérisé en ce que** le dispositif d'acheminement a la forme d'une pompe péristaltique (6).

3. Procédé selon l'une ou plusieurs des revendications qui précèdent, **caractérisé en ce qu'**un prélèvement de fluide à partir du bac (1) a lieu également via le même dispositif d'acheminement (6).

4. Procédé selon l'une ou plusieurs des revendications qui précèdent, **caractérisé en ce qu'**une livraison d'air ambiant a lieu via une deuxième ou une autre conduite de livraison (21) et/ou une livraison de concentré de fluide a lieu via une deuxième ou une autre conduite de livraison (22).

5. Procédé selon l'une ou plusieurs des revendications qui précèdent, **caractérisé en ce qu'**une livraison d'eau, de préférence d'eau distillée, a lieu via la première conduite de livraison (11).

6. Procédé selon l'une ou plusieurs des revendications qui précèdent, **caractérisé en ce que** le fluide de la première et/ou d'une autre conduite de livraison (11, 22, 23) est conduit à travers le bac (1) avant l'alimentation dans le bac (1).

7. Procédé selon l'une ou plusieurs des revendications qui précèdent, **caractérisé en ce que** la conduction du liquide à travers le bac (1) a lieu au moyen d'une conduite formée sur ou dans une entretoise.

8. Agencement pour le transport du fluide d'un élément de batterie dans un bac de batterie d'accumulateurs, avec une conduite de fluide (4, 25) menant dans l'élément de batterie, un dispositif d'acheminement (6) autoaspirant et/ou dont le sens de déplacement peut être inversé coopérant avec une section de la conduite de fluide (4, 25) étant prévu, **caractérisé par** des moyens (17) pour conduire le fluide à travers le bac (1) avant la mise en oeuvre du dispositif d'acheminement (6) et avant l'alimentation dans le bac (1).
